(19) Europäisches Patentamt
European Patent Office
Office européen des brevets

(11) **EP 4 567 575 A1**

(12) **EUROPEAN PATENT APPLICATION**
published in accordance with Art. 153(4) EPC

(43) Date of publication:
**11.06.2025 Bulletin 2025/24**

(21) Application number: **23854138.7**

(22) Date of filing: **30.06.2023**

(51) International Patent Classification (IPC):
*G06F 3/06* (2006.01)

(52) Cooperative Patent Classification (CPC):
**G06F 3/06**

(86) International application number:
**PCT/CN2023/105224**

(87) International publication number:
**WO 2024/037233 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.08.2022 CN 202210985223**
**28.11.2022 CN 202211508564**

(71) Applicant: **Huawei Cloud Computing Technologies Co., Ltd.**
**Guizhou 550025 (CN)**

(72) Inventors:
• **WU, Jiaxi**
  **Guiyang New District, Guizhou, 550025 (CN)**
• **JING, Shuming**
  **Guiyang New District, Guizhou 550025 (CN)**
• **ZENG, Yongqiang**
  **Guiyang New District, Guizhou 550025 (CN)**

(74) Representative: **Maiwald GmbH**
**Engineering**
**Elisenhof**
**Elisenstrasse 3**
**80335 München (DE)**

(54) **STORAGE SYSTEM AND SCHEDULING METHOD**

(57) This application provides a storage system and a scheduling method. The scheduling method is applied to the field of cloud storage. The storage system includes: a first storage pool, provided with a first storage medium of a first storage medium type, where the first storage medium is used to carry a storage volume whose access attribute is the first storage medium type; a second storage pool, provided with a second storage medium of the first storage medium type, where the second storage medium is used to carry a storage volume whose access attribute is the first storage medium type or a second storage medium type; a third storage pool, provided with a third storage medium of the second storage medium type, where the third storage medium is used to carry a storage volume whose access attribute is the second storage medium type; and a scheduling node, configured to: when a hotspot occurs in the first storage pool or the third storage pool, migrate, to the second storage pool, a part of storage volumes in the storage pool in which the hotspot occurs. This application proposes a concept of hybrid storage pool. Resource scheduling based on the hybrid storage pool can effectively eliminate a hotspot.

FIG. 1

## Description

This application claims priorities to Chinese Patent Application No. 202210985223.2, filed with the China National Intellectual Property Administration on August 17, 2022 and entitled "SCHEDULING METHOD", and to Chinese Patent Application No. 202211508564.7, filed with the China National Intellectual Property Administration on November 28, 2022 and entitled "STORAGE SYSTEM AND SCHEDULING METHOD", both of which are incorporated herein by reference in their entireties.

## TECHNICAL FIELD

This application relates to the field of cloud storage, and in particular, to a storage system and a scheduling method.

## BACKGROUND

A storage system includes a plurality of types of storage pools, for example, a serial disk (serial advanced technology attachment, SATA) storage pool, a solid-state drive (solid-state drive, SSD) storage pool, and a serial attached small computer system interface disk (serial attached SCSI, SAS for short, where SCSI is an abbreviation of small computer system interface) storage pool. One type of storage pool can be used to carry only one type of storage volume. For example, an SATA-type storage pool can carry only an SATA storage volume, an SAS-type storage pool can carry only an SAS storage volume, and an SSD-type storage pool can carry only an SSD storage volume.

When a storage hotspot occurs in a storage pool in the storage system, only a part of storage volumes in the storage pool in which the storage hotspot occurs can be migrated to other storage pools of a same type to eliminate the storage hotspot. However, when storage volumes in the other storage pools of the same type are approximately saturated or already saturated, a new storage hotspot occurs if the some storage volumes are migrated to the other storage pools. Consequently, the storage hotspot cannot be eliminated.

## SUMMARY

This application provides a storage system and a scheduling method. By using the method in this application, a storage hotspot can be effectively eliminated, resources in resource pools can be balanced, and a sellable amount can be increased.

According to a first aspect, this application provides a storage system, including:

a first storage pool, provided with a first storage medium of a first storage medium type, where the first storage medium is used to carry a plurality of storage volumes whose access attributes are the first storage medium type;

a second storage pool, provided with a second storage medium of the first storage medium type, where the second storage medium is used to carry a plurality of storage volumes whose access attributes are the first storage medium type and a plurality of storage volumes whose access attributes are a second storage medium type;

a third storage pool, provided with a third storage medium of the second storage medium type, where the third storage medium is used to carry a plurality of storage volumes whose access attributes are the second storage medium type; and

a scheduling node, configured to:

when determining that a hotspot occurs in the first storage pool, migrate a part of storage volumes in the plurality of storage volumes whose access attributes are the first storage medium type in the first storage medium to the second storage medium in the second storage pool; and

when determining that a hotspot occurs in the second storage pool, migrate a part of storage volumes in the plurality of storage volumes whose access attributes are the first storage medium type in the second storage medium to the first storage medium in the first storage pool, and/or migrate a part of storage volumes in the plurality of storage volumes whose access attributes are the second storage medium type in the second storage medium to the third storage medium in the third storage pool, where storage performance of the second storage medium type is lower than storage performance of the first storage medium type.

It can be learned that this application provides a storage system. The storage system includes a first storage pool, a second storage pool, a third storage pool, and a scheduling node. The second storage pool is a hybrid storage pool. The second storage pool is provided with a storage medium of a first storage medium type. A storage medium in the second storage pool may be used to carry a storage volume whose access attribute is the first storage medium type, and may further be used to carry a storage volume of a storage medium type whose storage performance is lower than storage performance of the first storage medium, for example, a storage volume of a second storage medium type. When a hybrid storage pool is not proposed, a storage volume in the first storage pool or the third storage pool can interact only with a storage volume in a storage pool of a same storage medium type as the first storage pool or the third storage pool, and a storage volume in a storage pool cannot be migrated to a storage pool of a different storage medium type. This application proposes a concept of hybrid storage pool. A storage volume in the hybrid storage pool can be migrated to storage pools of a plurality of storage medium types supported by the hybrid storage pool, and a storage volume in the storage pools of the plurality of storage medium types supported by the hybrid storage pool can be migrated to the hybrid storage pool. When a hotspot occurs in the first storage pool or the second storage pool (the hybrid storage pool) in the storage system, a storage volume in the first storage pool and a storage volume in the second storage pool (the hybrid storage pool) may be migrated to eliminate the hotspot.

Based on the first aspect, in a possible implementation, the storage system further includes:

a fourth storage pool, provided with a fourth storage medium of the second storage medium type, where the fourth storage medium is used to carry a plurality of storage volumes whose access attributes are the second storage medium type and a plurality of storage volumes whose access attributes are a third storage medium type; and
a fifth storage pool, provided with a fifth storage medium of the third storage medium type, where the fifth storage medium is used to carry a plurality of storage volumes whose access attributes are the third storage medium type.

The scheduling node is further configured to:

when determining that a hotspot occurs in the third storage pool, migrate a part of storage volumes in the plurality of storage volumes whose access attributes are the second storage medium type in the third storage medium to the second storage medium in the second storage pool, and/or migrate a part of storage volumes in the plurality of storage volumes whose access attributes are the second storage medium type in the third storage medium to the fourth storage medium in the fourth storage pool;
when determining that a hotspot occurs in the fourth storage pool, migrate a part of storage volumes in the plurality of storage volumes whose access attributes are the second storage medium type in the fourth storage medium to the third storage medium in the third storage pool, and/or migrate a part of storage volumes in the plurality of storage volumes whose access attributes are the third storage medium type in the fourth storage medium to the fifth storage medium in the fifth storage pool; and
when determining that a hotspot occurs in the fifth storage pool, migrate a part of storage volumes in the plurality of storage volumes whose access attributes are the third storage medium type in the fifth storage medium to the fourth storage medium in the fourth storage pool. Storage performance of the third storage medium type is lower than the storage performance of the second storage medium type.

It can be learned that the storage system may include a plurality of hybrid storage pools, and each hybrid storage pool may be used to carry storage volumes of a plurality of storage medium types. The hybrid storage pool can effectively eliminate the hotspot in the storage system.

Based on the first aspect, in a possible implementation, the first storage medium type is a solid-state drive SSD type, the second storage medium type is a serial attached small computer system interface disk SAS type, and the third storage medium type is a serial disk SATA type.

Based on the first aspect, in a possible implementation, the first storage medium type is a multi-level cell MLC subtype in a solid-state drive SSD type, the second storage medium type is a trinary-level cell TLC subtype in the SSD type, and the third storage medium type is a quad-level cell QLC subtype in the SSD type.

Based on the first aspect, in a possible implementation, the first storage medium type is a single-level cell SLC subtype in a solid-state drive SSD type, the second storage medium type is a multi-level cell MLC subtype in the SSD type, and the third storage medium type is a trinary-level cell TLC subtype in the SSD type.

Based on the first aspect, in a possible implementation, the first storage medium type is a single-level cell SLC subtype in a solid-state drive SSD type, the second storage medium type is a multi-level cell MLC subtype or a trinary-level cell TLC subtype in the SSD type, and the third storage medium type is a quad-level cell QLC subtype in the SSD type.

According to a second aspect, this application provides a scheduling method. The method is applied to a scheduling node in a storage system; the storage system further includes a first storage pool, a second storage pool, and a third storage pool; the first storage pool is provided with a first storage medium of a first storage medium type, and the first storage medium is used to carry a plurality of storage volumes whose access attributes are the first storage medium type; the second storage pool is provided with a second storage medium of the first storage medium type, and the second storage medium is used to carry a plurality of storage volumes whose access attributes are the first storage medium type and a plurality of storage volumes whose access attributes are a second storage medium type; the third storage pool is provided with a third storage medium of the second storage medium type, and the third storage medium is used to carry a plurality of storage volumes whose access attributes are the second storage medium type; storage performance of the second storage medium type is lower than storage performance of the first storage medium type; and the method includes:

when determining that a hotspot occurs in the first storage pool, migrating a part of storage volumes in the plurality of storage volumes whose access attributes are the first storage medium type in the first storage medium to the second storage medium in the second storage pool; and

when determining that a hotspot occurs in the second storage pool, migrating a part of storage volumes in the plurality of storage volumes whose access attributes are the first storage medium type in the second storage medium to the first storage medium in the first storage pool, and/or migrating a part of storage volumes in the plurality of storage volumes whose access attributes are the second storage medium type in the second storage medium to the third storage medium in the third storage pool.

It can be learned that the storage system includes the first storage pool, the second storage pool, the third storage pool, and the scheduling node. The second storage pool is a hybrid storage pool. The second storage pool is provided with a storage medium of the first storage medium type. A storage medium in the second storage pool may be used to carry a storage volume whose access attribute is the first storage medium type, and may further be used to carry a storage volume of a storage medium type whose storage performance is lower than storage performance of the first storage medium, for example, a storage volume of the second storage medium type. When a hybrid storage pool is not proposed, a storage volume in the first storage pool or the third storage pool can interact only with a storage volume in a storage pool of a same storage medium type, and a storage volume in a storage pool of a different storage medium type cannot be migrated. This application proposes a concept of hybrid storage pool. A storage volume in the hybrid storage pool may be migrated to storage volumes of a plurality of storage medium types supported by the hybrid storage pool. When a hotspot occurs in the first storage pool or the second storage pool (the hybrid storage pool) in the storage system, a storage volume in the first storage pool and a storage volume in the second storage pool (the hybrid storage pool) may be migrated to eliminate the hotspot.

Based on the second aspect, in a possible implementation, the storage system further includes a fourth storage pool and a fifth storage pool; the fourth storage pool is provided with a fourth storage medium of the second storage medium type, and the fourth storage medium is used to carry a plurality of storage volumes whose access attributes are the second storage medium type and a plurality of storage volumes whose access attributes are a third storage medium type; and the fifth storage pool is provided with a fifth storage medium of the third storage medium type, and the fifth storage medium is used to carry a plurality of storage volumes whose access attributes are the third storage medium type.

The method further includes:

when determining that a hotspot occurs in the third storage pool, migrating a part of storage volumes in the plurality of storage volumes whose access attributes are the second storage medium type in the third storage medium to the second storage medium in the second storage pool, and/or migrating a part of storage volumes in the plurality of storage volumes whose access attributes are the second storage medium type in the third storage medium to the fourth storage medium in the fourth storage pool;

when determining that a hotspot occurs in the fourth storage pool, migrating a part of storage volumes in the plurality of storage volumes whose access attributes are the second storage medium type in the fourth storage medium to the third storage medium in the third storage pool, and/or migrating a part of storage volumes in the plurality of storage volumes whose access attributes are the third storage medium type in the fourth storage medium to the fifth storage medium in the fifth storage pool; and

when determining that a hotspot occurs in the fifth storage pool, migrating a part of storage volumes in the plurality of storage volumes whose access attributes are the third storage medium type in the fifth storage medium to the fourth storage medium in the fourth storage pool.

Storage performance of the third storage medium type is lower than the storage performance of the second storage medium type.

Based on the second aspect, in a possible implementation, the first storage medium type is a solid-state drive SSD type, the second storage medium type is a serial attached small computer system interface disk SAS type, and the third storage medium type is a serial disk SATA type.

Based on the second aspect, in a possible implementation, the first storage medium type is a multi-level cell MLC subtype in a solid-state drive SSD type, the second storage medium type is a trinary-level cell TLC subtype in the SSD type, and the third storage medium type is a quad-level cell QLC subtype in the SSD type.

Based on the second aspect, in a possible implementation, the first storage medium type is a single-level cell SLC subtype in a solid-state drive SSD type, the second storage medium type is a multi-level cell MLC subtype in the SSD type, and the third storage medium type is a trinary-level cell TLC subtype in the SSD type.

Based on the second aspect, in a possible implementation, the first storage medium type is a single-level cell SLC subtype in a solid-state drive SSD type, the second storage medium type is a multi-level cell MLC subtype or a trinary-level cell TLC subtype in the SSD type, and the third storage medium type is a quad-level cell QLC subtype in the SSD type.

Based on the second aspect, in a possible implementation, the hotspot means that at least one of a virtual capacity of a storage pool, physical space occupation of the storage pool, and a bandwidth of the storage pool exceeds a corresponding threshold; the physical space occupation of the storage pool is a sum of occupied physical space in all storage volumes included in the storage pool; and the bandwidth of the storage pool is a sum of bandwidths of all the storage volumes included in the storage pool.

Based on the second aspect, in a possible implementation, the method further includes: determining, by the scheduling node, one or more strongly fluctuating storage volumes included in the storage system, where the strongly fluctuating storage volume means that a variation of at least one of physical space occupation and a bandwidth of a storage volume in a specified time interval exceeds a threshold variation; and evenly distributing the one or more included strongly fluctuating storage volumes to all the storage pools in the storage system based on a quantity of the included strongly fluctuating storage volumes.

It may be understood that by introducing a hybrid storage pool, the one or more strongly fluctuating storage volumes in the storage system may be migrated, so that the one or more strongly fluctuating storage volumes are evenly distributed to all the storage pools in the storage system, thereby avoiding a hotspot occurring in a storage pool in the storage system as much as possible, and reducing a risk of occurrence of a hotspot in the storage pool.

According to a third aspect, this application provides a computing device cluster, including at least one computing device. Each of the at least one computing device includes a memory and a processor, and the processor of the at least one computing device is configured to execute instructions stored in the memory of the at least one computing device, so that the computing device cluster performs the method according to any one of the second aspect or the possible implementations of the second aspect.

According to a fourth aspect, this application provides a computer-readable storage medium, including computer program instructions. When the computer program instructions are executed by a computing device cluster, the computing device cluster performs the method according to any one of the second aspect or the possible implementations of the second aspect.

According to a fifth aspect, this application provides a computer program product including program instructions. When the program instructions are executed by a computing device cluster, the computing device cluster performs the method according to any one of the second aspect or the possible implementations of the second aspect.

## BRIEF DESCRIPTION OF DRAWINGS

FIG. 1 is a diagram of a scenario of a storage system according to this application;
FIG. 2 is a diagram of migration directions of storage volumes according to this application;
FIG. 3 is a diagram of other migration directions of storage volumes according to this application;
FIG. 4 is a diagram of an example of a scenario of a storage system according to this application;
FIG. 5 is a schematic flowchart of a scheduling method according to this application;
FIG. 6 is a diagram of an example of a scenario according to this application;
FIG. 7 is a diagram of an example of another scenario according to this application;
FIG. 8 is a diagram of a structure of a storage system according to this application;
FIG. 9 is a diagram of a structure of a computing device according to this application;
FIG. 10 is a diagram of a structure of a computing device cluster according to this application; and
FIG. 11 is a diagram of a structure of another computing device cluster according to this application.

## DESCRIPTION OF EMBODIMENTS

For ease of understanding, before this application is described, terms used in this application are explained first.

Virtual capacity: This application involves a virtual capacity of a storage volume and a virtual capacity of a storage pool. The virtual capacity of the storage volume is a total capacity marked on specifications of the storage volume. Generally, an available capacity during actual application is less than the total capacity marked on the storage volume. (The virtual capacity includes a system file or another file used to manage and use the storage volume.) The storage pool includes one or more storage volumes, and the virtual capacity of the storage pool is a sum of virtual capacities of all storage volumes included in the storage pool.

Physical space occupation: This application involves physical space occupation of a storage volume and physical space occupation of a storage pool. The physical space occupation of the storage volume is a size of storage space of the storage volume actually occupied at a moment. The physical space occupation of the storage pool is a sum of physical space occupation of all storage volumes included in the storage pool.

Bandwidth: This application involves a bandwidth of a storage volume and a bandwidth of a storage pool. The bandwidth of the storage volume is an amount of data read and written from the storage volume per unit time. The bandwidth of the storage pool is a sum of bandwidths of all storage volumes included in the storage pool.

That a hotspot occurs in a storage pool means that values of one or more attributes of the storage pool exceed corresponding thresholds, and attributes of the storage pool include a virtual capacity, physical space occupation, and a bandwidth. Thresholds of various attributes are set in a storage pool. For different storage pools, thresholds of a same attribute may be different or may be the same. For same storage pools, thresholds of different attributes are generally different. Thresholds corresponding to various attributes may be set by a user. For example, when physical space occupation of a storage pool exceeds a corresponding threshold, it is considered that a hotspot occurs in the storage pool in a physical space occupation dimension; when a bandwidth of the storage pool exceeds a corresponding threshold, it is considered that a hotspot occurs in the storage pool in a bandwidth dimension; and if the physical space occupation of the storage pool exceeds the corresponding threshold and the bandwidth also exceeds the corresponding threshold, it is considered that a hotspot occurs in the storage pool in both the physical space occupation dimension and the bandwidth dimension.

The virtual capacity of the storage pool is a fixed value. In a use process, the virtual capacity of the storage pool usually does not exceed a threshold. Therefore, in this application, that a hotspot occurs in the storage pool generally means that a hotspot occurs in the storage pool in the physical space occupation dimension and/or the bandwidth dimension.

A hybrid storage pool is a storage pool that can carry two or more storage medium types of storage volumes. For example, if a storage pool can carry both an SSD-type storage volume and an SAS-type storage volume, the storage pool is a hybrid storage pool. For another example, if a storage pool can carry both an SAS-type storage volume and an SATA-type storage volume, the storage pool is a hybrid storage pool.

It can be understood that a storage pool is provided with a storage medium, and the storage medium may be used to carry a storage volume. Different types of storage media may carry different types of storage volumes. For example, an SSD-type storage medium may be used to carry an SSD-type storage volume, an SATA-type storage medium is used to carry an SATA-type storage volume, and an SAS-type storage medium is used to carry an SAS-type storage volume.

The storage system includes a plurality of types of storage pools. Different types of storage pools correspond to different application programming interfaces (application programming interface, API). When data needs to be written to or read from a storage pool, the data may be written to the storage pool or read from the storage pool through an API corresponding to the storage pool. The data exists in the storage pool in a form of a storage volume. A storage medium is used to carry the storage volume. For example, data may be written to an SSD storage pool through an SSD API. In other words, the SSD storage medium is used to carry a storage volume whose access attribute is an SSD API type, the SAS storage medium is used to carry a storage volume whose access attribute is an SAS API type, and the SATA storage medium is used to carry a storage volume whose access attribute is an SATA API type. The access attribute is a type of an access interface of the storage medium. For example, the access attribute may be an SSD API, an SAS API, an SATA API, or an access interface type of another storage medium type.

A common storage pool is used to carry one storage medium type of storage volume. For example, an SATA storage pool is used to carry an SATA-type storage volume, an SAS storage pool is used to carry an SAS-type storage volume, and an SSD storage pool is used to carry an SSD-type storage volume.

This application provides a hybrid storage pool. The following describes how to obtain the hybrid storage pool.

When a storage system includes a plurality of types of storage pools, some of storage pools with relatively high performance may be classified and configured as hybrid storage pools. Before and after the configuration, a storage medium remains unchanged, but a configuration method and a management method are changed. The performance includes a data read/write speed. A higher data read/write speed indicates higher performance, and a lower data read/write speed indicates lower performance. Management manners of the hybrid storage pool and a storage pool that is used to carry one type of storage volume are different. The differences in the management manners include:

The storage pool used to carry one type of storage volume only allows migration of a storage volume between storage pools of a same type, and does not allow migration of a storage volume between different types of storage pools. For example, an SSD storage pool only allows migration of a storage volume between SSD storage pools, and does not allow migration of a storage volume between an SSD storage pool and another storage pool. The same case applies to an SATA storage pool and an SAS storage pool, which only allow migration of a storage volume between storage pools of a same type, and do not allow migration of a storage volume between different types of storage pools.

If it is set that the hybrid storage pool allows to carry two types of storage volumes, for example, if it is set that the hybrid storage pool allows to carry an SSD-type storage volume and an SAS-type storage volume, a storage volume may be migrated between the hybrid storage pool and the SSD storage pool, and a storage volume may also be migrated between the hybrid storage pool and the SAS storage pool. If it is set that the hybrid storage pool allows to carry an SATA-type storage volume and an SAS-type storage volume, a storage volume may be migrated between the hybrid storage pool and the SATA storage pool, and a storage volume may also be migrated between the hybrid storage pool and the SAS storage pool. That is, the hybrid storage pool may communicate with a supported type of storage pool.

Types of storage volumes that can be carried by the hybrid storage pool may be specifically set by a user based on an actual application scenario and a specific requirement. This is not specifically limited in this application. Herein, a storage pool used to carry one type and the types of hybrid storage pools are merely used as examples, and are not intended to limit this application. During actual application, the storage pool used to carry one type may be another type of storage pool, and the hybrid storage pool may further be used to carry more types of storage volumes. This is not limited in this application.

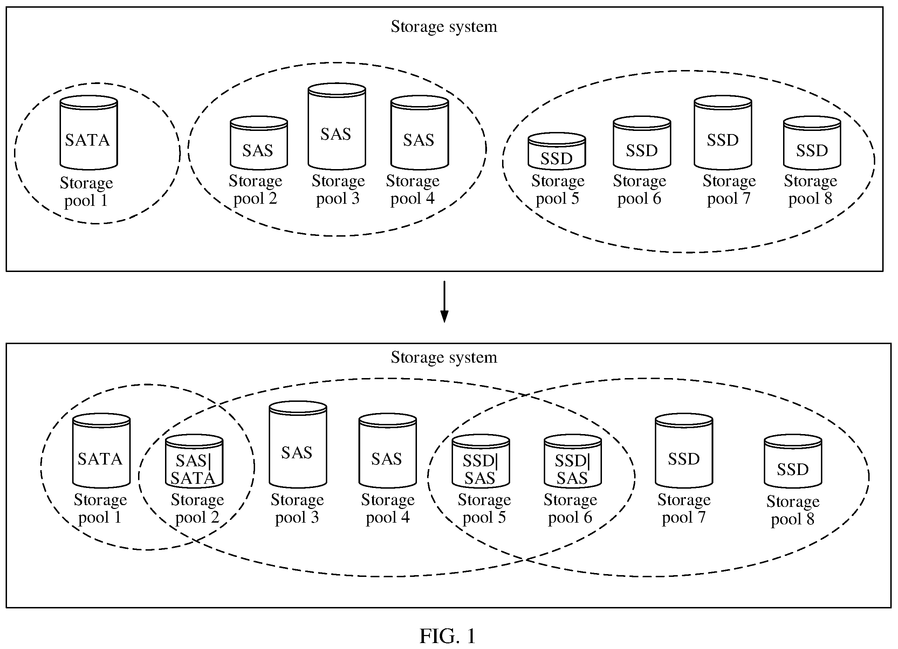

For example, refer to a diagram of a scenario shown in FIG. 1, a storage system includes a storage pool 1, a storage pool 2, a storage pool 3, a storage pool 4, a storage pool 5, a storage pool 6, a storage pool 7, and a storage pool 8. The storage pool 1 is an SATA storage pool. The storage pool 2, the storage pool 3, and the storage pool 4 are SAS storage pools. The storage pool 5, the storage pool 6, the storage pool 7, and the storage pool 8 are SSD storage pools. Herein, the SSD storage pool means that only a type of storage medium with the same storage performance is included. A sequence of the storage pools in terms of performance in descending order is: the SSD storage pool, the SAS storage pool, and the SATA storage pool. The performance herein includes a data read/write speed.

The storage pool 2 is determined as a hybrid storage pool. The hybrid storage pool is set to being used to carry a storage volume whose access attribute is an SAS type, or being used to carry a storage volume whose access attribute is an SATA type. The hybrid storage pool may be referred to as an SASISATA hybrid storage pool or an SATA|SAS hybrid storage pool. The storage pool 5 and the storage pool 6 are determined as other hybrid storage pools. The hybrid storage pools are set to being used to carry a storage volume whose access attribute is an SSD type, or being used to carry a storage volume whose access attribute is an SAS type. The hybrid storage pools may be referred to as SAS|SSD hybrid storage pools or SSD|SAS hybrid storage pools.

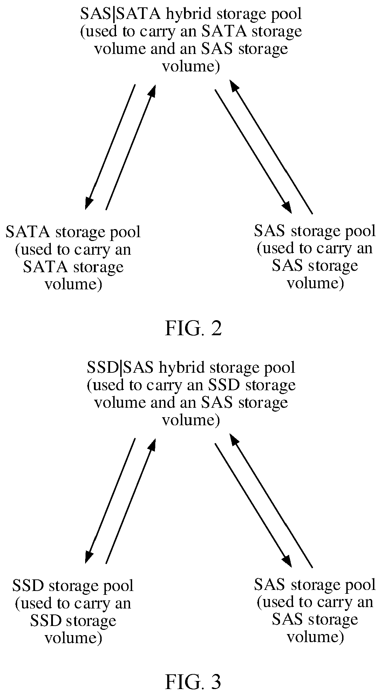

The following describes migration directions allowed by storage volumes in various storage pools in FIG. 2. FIG. 2 is a diagram of a relationship between an SASISATA hybrid storage pool, an SAS storage pool, and an SATA storage pool according to this application. As can be learned from FIG. 2, the SAS storage pool and the SATA storage pool both can communicate with the SAS|SATA hybrid storage pool, that is, a storage volume in the SATA storage pool and a storage volume in the SAS storage pool both can be migrated to the SAS|SATA hybrid storage pool, an SAS storage volume in the SAS|SATA hybrid storage pool can also be migrated to the SAS storage pool, and an SATA storage volume can be migrated to the SATA storage pool. However, the SAS storage pool and the SATA storage pool do not communicate with each other, that is, a storage volume in the SAS storage pool cannot be migrated to the SATA storage pool, and a storage volume in the SATA storage pool cannot be migrated to the SAS storage pool. It should be noted that each storage volume carries its own attribute. The storage system can learn of a type of a storage volume based on an attribute carried by the storage volume.

FIG. 3 is a diagram of a relationship between an SAS|SSD hybrid storage pool, an SAS storage pool, and an SSD storage pool according to this application. As can be learned from FIG. 3, the SAS storage pool and the SSD storage pool both can communicate with the SAS|SSD hybrid storage pool, that is, a storage volume in the SSD type storage pool and a storage volume in the SAS storage pool both can be migrated to the SAS|SSD hybrid storage pool, an SAS storage volume in the SAS|SSD hybrid storage pool can be migrated to the SAS storage pool, and an SSD storage volume can be migrated to the SSD storage pool. However, the SAS storage pool and the SSD storage pool do not communicate with each other, that is, a storage volume in the SAS storage pool cannot be migrated to the SSD storage pool, and a storage volume in the SSD type storage pool cannot be migrated to the SAS storage pool.

It can be understood that the SAS|SSD hybrid storage pool and the SAS|SATA hybrid storage pool are merely used as examples. During actual application, another type of hybrid storage pool may further be set. For example, an SATA|SSD hybrid storage pool may be set. The SATA|SSD hybrid storage pool is used to carry an SATA-type storage volume and an SSD-type storage volume. For another example, an SATA|SAS|SSD hybrid storage pool may further be set. The SATA|SAS|SSD hybrid storage pool is used to carry an SATA-type storage volume, an SAS-type storage volume, an SSD-type storage volume, and the like. A type of a hybrid storage pool and a type of a storage volume and a quantity of storage volumes that are allowed to be carried by the hybrid storage pool are not limited in this application.

An SSD storage medium has relatively high storage performance. The storage performance includes a read/write speed of data in the storage medium. The SSD storage medium also includes a single-level cell (Single-Level Cell, SLC) storage medium, a multi-level cell (Multi-Level Cell, MLC) storage medium, a trinary-level cell (Trinary-Level Cell, TLC) storage medium, and a quad-level cell (Quad-Level Cell, QLC) storage medium.

The SLC storage medium means that a storage granularity in a storage pool is an SLC, each storage cell in the storage pool stores 1-bit information, and the storage pool has two voltage changes: 0 and 1. This type of storage pool has a simple structure, relatively fast voltage control, a long service life, and high storage performance. The MLC storage medium means that a storage granularity in a storage pool is an MLC, each storage cell stores 2-bit information, and the storage pool has 4 changes: 00, 01, 10, and 11. This type of storage pool requires relatively complex voltage control, and has lower storage performance and reliability compared with the storage pool of the SLC storage medium. The TLC storage medium means that a storage granularity in a storage pool is a TLC, each storage cell stores 3-bit information, and the storage pool has 8 voltage changes: 000 to 111. This type of storage pool requires more complex voltage control, and has lower storage performance compared with the MLC. The QLC storage medium means that a storage granularity in a storage pool is a QLC, each storage cell stores 4-bit information, and the storage pool has 16 voltage changes: 0000 to 1111. Storage performance is lower than performance of the storage pool of the TLC storage medium.

An SLC-type storage pool, an MLC-type storage pool, a TLC-type storage pool, and a QLC-type storage pool are all SSD storage pools using different storage granularities and having different storage performance. Therefore, the SLC, the MLC, the TLC, and the QLC may be understood as different storage media, and may be used as different types of storage pools.

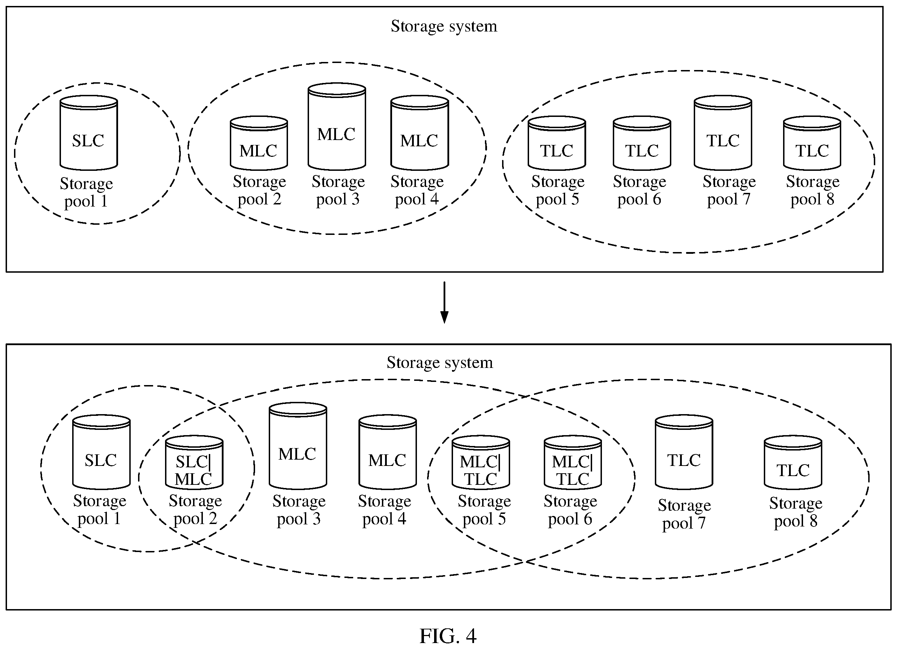

Refer to the diagram shown in FIG. 4. A storage system includes a storage pool 1, a storage pool 2, a storage pool 3, a storage pool 4, a storage pool 5, a storage pool 6, a storage pool 7, and a storage pool 8. A storage medium of the storage pool 1 is an SLC. The storage pool 1 can only be used to carry a storage volume whose access attribute is an SLC. Storage media of the storage pool 2, the storage pool 3, and the storage pool 4 are MLCs. The storage pool 2, the storage pool 3, and the storage pool 4 all can only be used to carry storage volumes whose access attributes are MLCs. Storage media of the storage pool 5, the storage pool 6, the storage pool 7, and the storage pool 8 are TLCs. The storage pool 5, the storage pool 6, the storage pool 7, and the storage pool 8 all can only be used to carry storage volumes whose access attributes are TLCs. In addition, storage volumes in storage pools with a same type of storage media may be migrated between each other, and storage volumes in storage pools with different types of storage media cannot be migrated between each other. To be specific, storage volumes in the storage pool 2, the storage pool 3, and the storage pool 4 may be migrated between each other; storage volumes in the storage pool 5, the storage pool 6, the storage pool 7, and the storage pool 8 may be migrated between each other; a storage volume in the storage pool 1 and a storage volume in the storage pool 2, the storage pool 3, or the storage pool 4 cannot be migrated between each other; and a storage volume in the storage pool 2, the storage pool 3, or the storage pool 4 and a storage volume in the storage pool 5, the storage pool 6, the storage pool 7, or the storage pool 8 cannot be migrated between each other.

Based on the concept of hybrid pool proposed in this application, the storage pool 2 may be configured as an SLC| MLC hybrid storage pool. The storage pool 2 not only can be used to carry a storage volume whose access attribute is an SLC, but also can be used to carry a storage volume whose access attribute is an MLC. Therefore, the storage volume whose access attribute is the SLC in the storage pool 2 may interact with a storage volume in the storage pool 1, and the storage volume whose access attribute is the MLC in the storage pool 2 may interact with storage volumes in the storage pool 3 and the storage pool 4.

The storage pool 5 and the storage pool 6 may further be configured as MLC|TLC hybrid storage pools. The storage pool 5 and the storage pool 6 not only can be used to carry storage volumes whose access attributes are MLCs, but also can be used to carry storage volumes whose access attributes are TLCs. Therefore, the storage volumes whose access attributes are MLCs in the storage pool 5 and the storage pool 6 may interact with the storage volumes in the storage pool 3 and the storage pool 4, and the storage volumes whose access attributes are TLCs in the storage pool 5 and the storage pool 6 may interact with the storage volumes in the storage pool 7 and the storage pool 8. In addition, the storage volumes whose access attributes are MLCs in the storage pool 5 and the storage pool 6 may interact with the storage volume whose access attribute is the MLC in the storage pool 2.

It should be noted that FIG. 4 is merely an example diagram. In an implementation, in FIG. 4, the storage medium in the storage pool 1 may be an MLC; the storage media in the storage pool 2, the storage pool 3, and the storage pool 4 are TLCs; and the storage media in the storage pool 5, the storage pool 6, the storage pool 7, and the storage pool 8 are QLCs. In another implementation, the storage medium in the storage pool 1 may be an SLC; the storage media in the storage pool 2, the storage pool 3, and the storage pool 4 are MLCs or TLCs; and the storage media in the storage pool 5, the storage pool 6, the storage pool 7, and the storage pool 8 are QLCs.

It can be understood that when the concept of hybrid storage pool is not proposed, storage volumes can be migrated only between storage pools of a same type. When a hotspot occurs in a storage pool in a dimension, and the hotspot almost occurs on a resource in a storage pool of the same type in the dimension, if a part of storage volumes in the storage pool in which the hotspot occurs are migrated to another storage pool of the same type, a hotspot is very likely to occur in the another storage pool. Therefore, in this case, storage volume migration between storage pools of the same type cannot eliminate the hotspot. The dimension herein is a physical space occupation dimension or a bandwidth dimension.

This application proposes the concept of hybrid storage pool. The hybrid storage pool may communicate with a storage pool of a supported type. When a hotspot occurs in a storage pool in a dimension, a part of storage volumes in the storage pool in which the hotspot occurs are migrated to the hybrid storage pool to eliminate the hotspot. If a hotspot also occurs or almost occurs in the hybrid storage pool, a part of storage volumes in the hybrid storage pool may be migrated to another storage pool to eliminate the hotspot in the hybrid storage pool. For example, in FIG. 1, when a hotspot occurs in the storage pool 1 (an SATA storage pool) in a dimension, a part of storage volumes in the storage pool 1 may be migrated to the SAS|SATA hybrid storage pool to eliminate the hotspot in storage pool 1. After the migration, if a hotspot occurs in the SAS|SATA hybrid storage pool in the dimension, a part of storage volumes in the SAS|SATA hybrid storage pool may be migrated to the storage pool 3 (an SAS storage pool) or the storage pool 4 (an SAS storage pool) to eliminate the hotspot in the SAS|SATA hybrid storage pool.

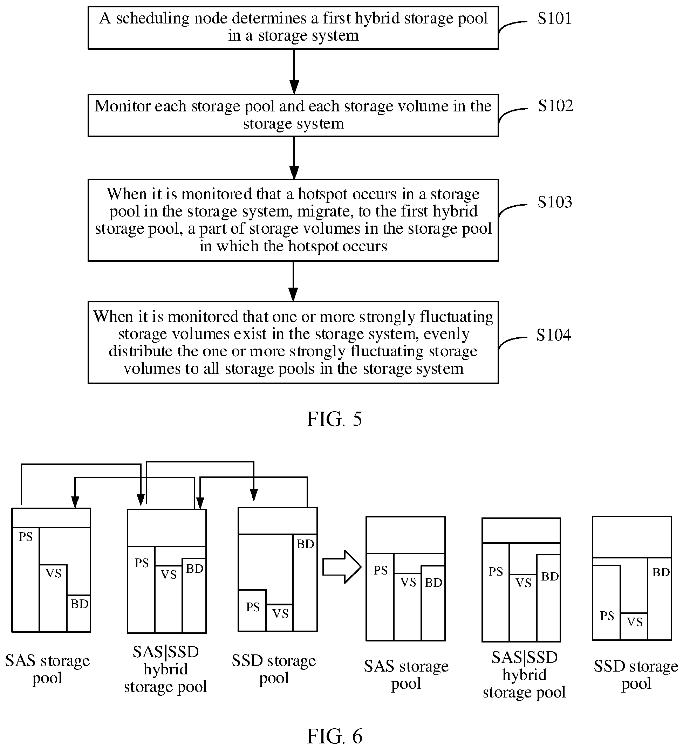

This application provides a scheduling method. FIG. 5 is a schematic flowchart of a scheduling method according to this application. The method includes but is not limited to descriptions of the following content.

S101: A scheduling node determines a first hybrid storage pool in a storage system.

In an implementation, the storage system includes a plurality of types of storage pools, and each type of storage pool includes one or more storage pools. Different types of storage pools have different performance. Some storage pools with higher performance are configured as hybrid storage pools. Optionally, one type of storage pool with relatively high performance in the storage system may be configured as one type of hybrid storage pool, or a plurality of types of storage pools with relatively high performance may be separately configured as a plurality of types of hybrid storage pools. Different types of hybrid storage pools have different performance and carry different types of storage volumes. The performance includes a data read/write speed.

For example, the storage system includes one or more SATA storage pools and a plurality of SAS storage pools. Some disk storage pools in the plurality of SAS storage pools may be configured as SAS|SATA hybrid storage pools. The SAS|SATA hybrid storage pools can carry both an SAS storage volume and an SATA storage volume. For another example, the storage system includes one or more SAS storage pools and a plurality of SSD storage pools. Some storage pools in the plurality of SSD storage pools may be configured as SAS|SSD hybrid storage pools. The SAS|SSD hybrid storage pools can carry both an SAS storage volume and an SSD storage volume.

For another example, the storage system includes one or more SATA storage pools, a plurality of SAS storage pools, and a plurality of SSD storage pools. Some hard disk drive storage pools in the plurality of SAS storage pools may be configured as SAS|SATA hybrid storage pools, and some storage pools in the SSD type storage pools may be configured as SAS|SSD hybrid storage pools. The SAS|SSD hybrid storage pools can carry both an SAS storage volume and an SSD storage volume.

For another example, the storage system includes a storage pool in which a storage medium is an SLC subtype, a storage pool in which a storage medium is an MLC type, a storage pool in which a storage medium is a TLC type, and a storage pool in which a storage medium is a QLC type. Some MLC-type storage pools may be set to SLC|MLC hybrid storage pools, some TLC-type storage pools may be set to MLC|TLC hybrid storage pools, and some QLC-type storage pools may be set to TLC|QLC hybrid storage pools.

In an implementation, a configuration is directly performed as a hybrid storage pool based on a storage medium, instead of configuring a storage pool of a type as a hybrid storage pool. Based on the storage medium, a configuration of a storage pool carrying one type is different from a configuration of a hybrid storage pool in terms of a usage manner and a management manner.

A quantity of hybrid storage pools is not limited in this application. In an example, a quantity of hybrid storage pools may be determined based on various types of storage pools included in the storage system and a quantity of storage pools of each type.

A first hybrid storage pool may be an SAS|SATA hybrid storage pool, an SAS|SSD hybrid storage pool, a TLC|QLC hybrid storage pool, an MLC|TLC hybrid storage pool, or an SLC|MLC hybrid storage pool. Alternatively, the first hybrid storage pool may be another storage pool. This is not limited in this application.

Optionally, the system may be provided with a plurality of types of hybrid storage pools. For example, the system is provided with the first hybrid storage pool and a second hybrid storage pool. The first hybrid storage pool is an SAS|SATA hybrid storage pool, and the second hybrid storage pool is an SAS|SSD hybrid storage pool; or the first hybrid storage pool is an SAS|SSD hybrid storage pool, and the second hybrid storage pool is an SAS|SATA hybrid storage pool; or the first hybrid storage pool is an SLC|MLC hybrid storage pool, and the second hybrid storage pool is an MLC|TLC hybrid storage pool. A quantity of types of hybrid storage pools is not limited in this application, and a quantity of hybrid storage pools of each type is not limited.

S102: Monitor each storage pool and each storage volume in the storage system.

The storage system monitors each storage volume, including monitoring each storage volume in a virtual capacity dimension, a physical space occupation dimension, and a bandwidth dimension. Specifically, the storage system monitors a virtual capacity, physical space occupation, and a bandwidth of each storage volume in real time. A virtual capacity, physical space occupation, and a bandwidth of each storage pool included in the storage system may be determined based on the virtual capacity, the physical space occupation, and the bandwidth of each storage volume. The storage pools included in the storage system include a storage pool used to carry one type of storage volume and a hybrid storage pool.

Whether a hotspot occurs in each storage pool in the physical space occupation dimension may be determined based on the physical space occupation of the storage pool. Whether a hotspot occurs in each storage pool in the bandwidth dimension may be determined based on the bandwidth of the storage pool.

S103: When it is monitored that a hotspot occurs in a storage pool in the storage system, migrate, to the first hybrid storage pool, a part of storage volumes in the storage pool in which the hotspot occurs.

A hotspot occurring in a storage pool includes the hotspot occurring in the storage pool in the physical dimension, a hotspot occurring in the storage pool in a bandwidth dimension, or a hotspot occurring in the storage pool in both the physical dimension and the bandwidth dimension.

When it is monitored that the hotspot occurs in the storage pool, a part of storage volumes in the storage pool in which the hotspot occurs are migrated to the first hybrid storage pool. For example, in the system in FIG. 1, if the storage pool in which the hotspot occurs is the SATA storage pool, a part of storage volumes in the storage pool in which the hotspot occurs may be migrated to the SAS|SATA hybrid storage pool; if the storage pool in which the hotspot occurs is the SAS storage pool, a part of storage volumes in the storage pool in which the hotspot occurs may be migrated to the SAS|SATA hybrid storage pool or the SAS|SSD hybrid storage pool; or if the storage pool in which the hotspot occurs is the SSD storage pool, a part of storage volumes in the storage pool in which the hotspot occurs may be migrated to the SASISSD hybrid storage pool. For another example, if the storage pool in which the hotspot occurs is the SLC-type storage pool, a part of storage volumes in the storage pool in which the hotspot occurs may be migrated to the SLC|MLC hybrid storage pool; or if the storage pool in which the hotspot occurs is the MLC-type storage pool, a part of storage volumes in the storage pool in which the hotspot occurs may be migrated to the SLC|MLC hybrid storage pool or the TLC|MLC hybrid storage pool.

Specifically, to-be-migrated storage volumes in the storage pool in which the hotspot occurs and a hybrid storage pool (when a plurality of hybrid storage pools or a plurality of types of hybrid storage pools are included) to which the storage volumes are migrated may be determined by using an algorithm. For example, a to-be-migrated storage volume and a destination hybrid storage pool may be determined based on the following formula (1):

$$\frac{\hat{f} - f^{o}}{Acc_{j}(\hat{x}) - Acc_{j}(x^{o})} \qquad (1)$$

$\hat{f}$ indicates a sellable amount of a system after migration, $f^{o}$ indicates a sellable amount of the system before migration, the sellable amount of the system includes a sum of sellable amounts of all storage pools in the system, $Acc_{j}$ indicates a sellable ratio, $Acc_{j}(\hat{x})$ indicates a sellable ratio of the storage pool j after migration, $Acc_{j}(x^{o})$ indicates a sellable ratio of the storage pool j before migration, and the storage pool j is the storage pool in which a to-be-migrated storage volume is located.

The formula (1) is to maximize a value of a unit capacity. The formula (1) may be implemented by using an algorithm. After a plurality of rounds of algorithm iteration, the to-be-migrated storage volume traverses all storage volumes in the storage system, and the destination hybrid storage pool traverses all storage pools in the storage system to determine the to-be-migrated storage volumes and the destination hybrid storage pool, thereby determining an optimal migration solution.

The following describes the sellable amount and the sellable ratio.

The sellable ratio is a ratio of sellable storage space. $VSU_{j}(t)$ indicates a virtual capacity of the storage pool j at a moment t, $VST_{j}$ indicates a threshold corresponding to the virtual capacity of the storage pool j, $PST_{j}$ indicates a threshold corresponding to physical space occupation of the storage pool j, $BWT_{j}$ indicates a threshold corresponding to a bandwidth of the storage pool j, $PSU_{j}(t)$ indicates the physical space occupation of the storage pool j at the moment t, $BWU_{j}(t)$ indicates the bandwidth of the storage pool j at the moment t, and $Acc_{j}(t)$ indicates the sellable ratio of the storage pool j at the moment t. Each value is indicated by using a decimal or a percentage. In this case, the formula is as follows:

$$Acc_{j}(t) = \min\{ VST_{j} - VSU_{j}(t), PST_{j} - PSU_{j}(t), BWT_{j} - BWU_{j}(t)\} \qquad (2)$$

The sellable amount (accommodation capacity) indicates a sellable value. A larger sellable amount indicates a larger sellable value, and a smaller sellable amount indicates a smaller sellable value.

$$\text{sellable amount} = p_{j} \times VST_{j} \times Acc_{j}(t) \qquad (3)$$

$p_{j}$ indicates the value of the unit capacity of the storage pool j.

Optionally, when it is detected that a hotspot occurs in a hybrid storage pool, a part of storage volumes in the hybrid storage pool may be migrated to another storage pool. A migration solution may be determined by using the foregoing formula (1).

S104: When it is monitored that one or more strongly fluctuating storage volumes exist in the storage system, evenly distribute the one or more strongly fluctuating storage volumes to all storage pools in the storage system.

The strongly fluctuating storage volume means that a variation of any attribute of the storage volume in a specified time interval exceeds a second threshold. For example, if a bandwidth variation of a storage volume in a time interval $\Delta t$ exceeds the second threshold, the storage volume is considered as a strongly fluctuating storage volume. For example, if the bandwidth of the storage volume at a moment t1 is w1, the bandwidth of the storage volume at a moment t2 is w2, where $t2 - t1 = \Delta t$, the bandwidth variation of the storage volume in the specified time interval is a difference between w1 and w2. If the difference between w1 and w2 exceeds the second threshold corresponding to the bandwidth, the storage volume is considered as a strongly fluctuating storage volume. If the difference between w1 and w2 does not exceed the second threshold corresponding to the bandwidth, the storage volume is not considered as a strongly fluctuating storage volume. For another example, if a variation of the physical space occupation of the storage volume in the specified time interval $\Delta t$ exceeds the second threshold, the storage volume is considered as a strongly fluctuating storage volume. For example, if the physical space occupation of the storage volume at a moment t3 is p1, and the physical space occupation of the storage volume at a moment t4 is p2, where $t4 - t3 = \Delta t$, the variation of the physical space occupation of the storage volume in the specified time interval is a difference between p2 and p1. If the difference between p2 and p1 exceeds the second threshold corresponding to the physical space occupation, the storage volume is considered as a strongly fluctuating storage volume. If the difference between p2 and p1 does not exceed the second threshold corresponding to the physical space occupation, the storage volume is not considered as a strongly fluctuating storage volume.

It should be noted that the second threshold corresponding to the bandwidth variation and the second threshold corresponding to the physical space occupation may be the same or may be different. During actual application, the second threshold corresponding to the bandwidth variation and the second threshold corresponding to the physical space occupation may be specifically set based on a specific application scenario. This is not limited in this application.

When it is monitored that one or more strongly fluctuating storage volumes exist in the storage system, a quantity of strongly fluctuating storage volumes is determined, and the one or more strongly fluctuating storage volumes are evenly distributed to all the storage pools in the storage system. For example, if a total of 10 strongly fluctuating storage volumes exist in the storage system, and there are a total of 5 storage pools, the 10 strongly fluctuating storage volumes are separately distributed to the 5 storage pools, and each storage pool includes 2 strongly fluctuating storage volumes.

Optionally, as storage volumes in all the storage pools are accumulated in the storage system, the storage pools may be unbalanced in each dimension. A sellable amount of the storage pool follows a "barrel effect" (the barrel effect law means that if a barrel wants to be full of water, all boards have to be equally flush and unbroken; and if one of the boards in the bucket is not flush or there is a hole under one of the boards, the bucket cannot be full of water, that is, the amount of water that a bucket can hold depends on the shortest board instead of the longest board), that is, is determined by a resource dimension with the least remaining amount. Therefore, it is necessary to migrate storage volumes to balance resource dimensions in each storage pool to further increase the sellable amount of the entire system. For example, a migration policy may be determined based on the following formula (4). The migration policy includes a to-be-migrated object (a to-be-migrated storage volume) and a destination storage pool (a storage pool to which the object is to be migrated).

$$\frac{\hat{f} - f^{o}}{\mathrm{ps}_i} \qquad (4)$$

In the formula (4), $\hat{f}$ indicates the sellable amount of the system after migration, $f^o$ indicates the sellable amount of the system before migration, $\mathrm{ps}_i$ indicates physical space occupation of a storage volume i, and the storage volume i is a to-be-migrated storage volume. The formula (4) means that a value of the unit capacity of the sellable amount of the system is more optimized after each time of migration. The formula (4) may be implemented by using an algorithm. After circulation of algorithm iteration, the to-be-migrated object traverses all storage volumes in the system, and the destination storage pool traverses all storage pools in the system to determine an optimal migration policy and maximize the sellable amount of the storage system.

For example, refer to the example diagram shown in FIG. 6. The storage system includes one SAS storage pool, one SSD storage pool, and one SAS|SSD hybrid storage pool. In FIG. 6, PS indicates physical space occupation, VS indicates a virtual capacity, and BD indicates a bandwidth. In an initial state, physical space occupation in the SAS storage pool is much greater than bandwidth occupation, and bandwidth occupation in the SSD type storage pool is much greater than physical space occupation. A shaded part indicates a sellable ratio of a storage pool. To balance each storage pool in various dimensions, storage volumes in the storage system are migrated. For example, a storage volume with relatively large bandwidth occupation and relatively small physical space occupation in the SSD type storage pool is migrated to an SAS|SSD hybrid storage pool, and a storage volume with relatively large physical space occupation and relatively small bandwidth occupation in the SAS|SSD hybrid storage pool is migrated to the SSD storage pool, so that occupation in a physical space occupation dimension and a bandwidth dimension in the SSD type storage pool is relatively balanced, thereby increasing a sellable ratio of the SSD storage pool. For another example, an SATA storage volume with relatively large bandwidth occupation and relatively small physical space occupation in the SAS|SSD hybrid storage pool may further be migrated to an SAS storage pool, so that resources in the SASISSD hybrid storage pool are more balanced in each dimension. The right part of FIG. 6 shows the case after migration. It can be learned that a difference between the physical space occupation and the bandwidth occupation in the SAS storage pool becomes smaller, and a difference between the physical space occupation and the bandwidth occupation in the SSD type storage pool also becomes smaller. It can be learned from FIG. 6 that after migration, resource in each storage pool are more balanced in each dimension. The sellable ratio of the SAS storage pool and the sellable ratio of the SSD storage pool both increase. The sellable ratio of the hybrid pool decreases. During actual application, the sellable value of the entire system increases.

It can be understood that when the concept of hybrid storage pool is not proposed, storage volumes can be migrated between storage pools of a same type, and storage volumes cannot be migrated between storage pools of different types. For the entire storage system, the increase of the system sellable amount is limited. After the concept of hybrid storage pool is proposed, storage volumes can be migrated between a hybrid storage pool and storage pools of different types, thereby helping increase the sellable amount of the entire system.

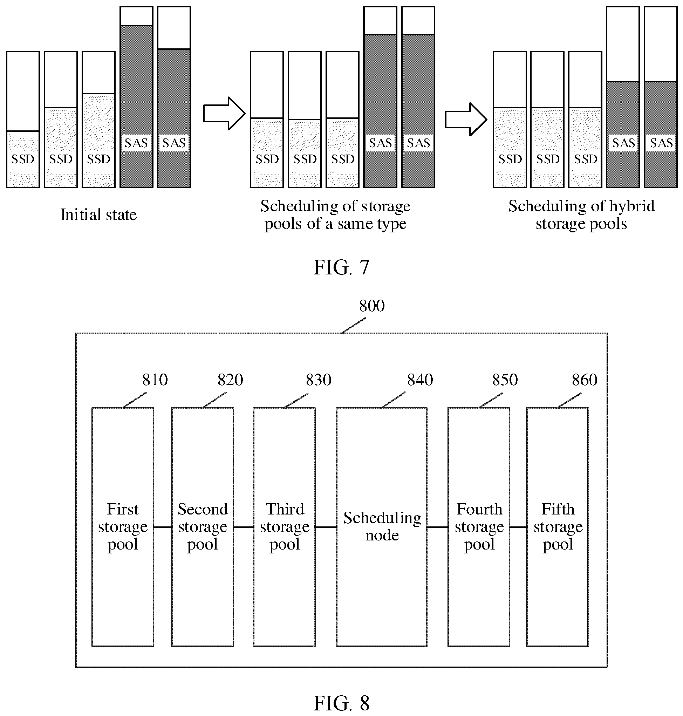

For example, refer to the example diagram shown in FIG. 7. A storage system includes 3 SSD storage pools and 2 SAS storage pools. As shown in the left part of FIG. 7, in an initial state, the SSD storage pools occupy a larger bandwidth and smaller physical space, and the SAS storage pools occupy larger physical space and a smaller bandwidth. Sellable ratios of the SSD storage pools are finally determined by data in a bandwidth dimension. Sellable ratios of the SAS storage pools are finally determined by data in a physical space occupation dimension. In FIG. 7, a blank length of a storage pool indicates a sellable ratio of the storage pool, and a longer blank length indicates a larger sellable ratio. When the concept of hybrid storage pool is not proposed, storage volumes are migrated between the 3 SSD storage pools and between the 2 SAS storage pools to obtain the middle part of FIG. 7. It can be learned that storage pools of the same type are more balanced. After the concept of hybrid storage pool is proposed, the 3 SSD storage pools may be configured as SSD|SAS hybrid storage pools, so that the 2 SAS storage pools can communicate with the 3 hybrid storage pools. The hybrid storage pools and the SAS storage pools are scheduled to obtain the right part of FIG. 7. It can be learned from the figure that the sellable ratios of the SAS storage pools increase significantly, and the sellable ratios of the hybrid storage pools decrease slightly. The increase in sellable amounts of the SAS storage pools is much greater than the decrease in sellable amounts of the SSD storage pools in terms of actual benefits.

It can be understood that there is no sequence between step S103 and step S104 in this application.

It may be understood that tiered storage (tiered storage) is also referred to as hierarchical storage management. Data that is not frequently accessed is placed at a storage medium level with relatively low performance, and data that is frequently accessed is placed at a storage medium level with relatively high performance. Data is stored in the most appropriate medium level to reduce storage costs and improve service quality. In this application, an idea of scheduling a hybrid storage pool is to allow, from a perspective of balancing, a storage volume with low performance to be migrated to a storage pool with high performance to release sellable space of the storage pool with low performance. In tiered storage, migrating data with low access traffic to a storage medium with high performance is contrary to its scheduling concept and is not allowed. However, in hybrid storage pool scheduling, migrating a storage volume with low performance to a storage pool with high performance is allowed. Benefits released by the storage pool with low performance are greater than costs occupied by the storage pool with high performance.

It can be learned that the concept of hybrid storage pool is proposed in this application. A storage pool in which some storage media with relatively high storage performance are located is configured as a hybrid storage pool. The hybrid storage pool may be used to carry two or more types of storage volumes. By setting the hybrid storage pool, storage volumes can be migrated between different types of storage pools, thereby effectively eliminating a hotspot in the storage system. By evenly distributing strongly fluctuating storage volumes to a plurality of storage pools, the sellable value of the storage system is improved.

This application provides a storage system. FIG. 8 is a diagram of a structure of a storage system 800 according to this application. The storage system 800 includes:

a first storage pool 810, provided with a first storage medium of a first storage medium type, where the first storage medium is used to carry a plurality of storage volumes whose access attributes are the first storage medium type;
a second storage pool 820, provided with a second storage medium of the first storage medium type, where the second storage medium is used to carry a plurality of storage volumes whose access attributes are the first storage medium type and a plurality of storage volumes whose access attributes are a second storage medium type;
a third storage pool 830, provided with a third storage medium of the second storage medium type, where the third storage medium is used to carry a plurality of storage volumes whose access attributes are the second storage medium type; and
a scheduling node 840, configured to:

when determining that a hotspot occurs in the first storage pool 810, migrate a part of storage volumes in the plurality of storage volumes whose access attributes are the first storage medium type in the first storage medium to the second storage medium in the second storage pool 820; and

when determining that a hotspot occurs in the second storage pool 820, migrate a part of storage volumes in the plurality of storage volumes whose access attributes are the first storage medium type in the second storage medium to the first storage medium in the first storage pool 810, and/or migrate a part of storage volumes in the plurality of storage volumes whose access attributes are the second storage medium type in the second storage medium to the third storage medium in the third storage pool 830, where storage performance of the second storage medium type is lower than storage performance of the first storage medium type.

In a possible implementation, the storage system 800 further includes:

a fourth storage pool 850, provided with a fourth storage medium of the second storage medium type, where the fourth storage medium is used to carry a plurality of storage volumes whose access attributes are the second storage medium type and a plurality of storage volumes whose access attributes are a third storage medium type; and

a fifth storage pool 860, provided with a fifth storage medium of the third storage medium type, where the fifth storage medium is used to carry a plurality of storage volumes whose access attributes are the third storage medium type.

The scheduling node 840 is further configured to:

when determining that a hotspot occurs in the third storage pool 830, migrate a part of storage volumes in the plurality of storage volumes whose access attributes are the second storage medium type in the third storage medium to the second storage medium in the second storage pool 820, and/or migrate a part of storage volumes in the plurality of storage volumes whose access attributes are the second storage medium type in the third storage medium to the fourth storage medium in the fourth storage pool 850;

when determining that a hotspot occurs in the fourth storage pool 850, migrate a part of storage volumes in the plurality of storage volumes whose access attributes are the second storage medium type in the fourth storage medium to the third storage medium in the third storage pool 830, and/or migrate a part of storage volumes in the plurality of storage volumes whose access attributes are the third storage medium type in the fourth storage medium to the fifth storage medium in the fifth storage pool 860; and

when determining that a hotspot occurs in the fifth storage pool 860, migrate a part of storage volumes in the plurality of storage volumes whose access attributes are the third storage medium type in the fifth storage medium to the fourth storage medium in the fourth storage pool 850, where storage performance of the third storage medium type is lower than the storage performance of the second storage medium type.

In a possible implementation, the first storage medium type is a solid-state drive SSD type, the second storage medium type is a serial attached small computer system interface disk SAS type, and the third storage medium type is a serial disk SATA type.

In a possible implementation, the first storage medium type is a multi-level cell MLC subtype in a solid-state drive SSD type, the second storage medium type is a trinary-level cell TLC subtype in the SSD type, and the third storage medium type is a quad-level cell QLC subtype in the SSD type.

In a possible implementation, the first storage medium type is a single-level cell SLC subtype in a solid-state drive SSD type, the second storage medium type is a multi-level cell MLC subtype in the SSD type, and the third storage medium type is a trinary-level cell TLC subtype in the SSD type.

In a possible implementation, the first storage medium type is a single-level cell SLC subtype in a solid-state drive SSD type, the second storage medium type is a multi-level cell MLC subtype or a trinary-level cell TLC subtype in the SSD type, and the third storage medium type is a quad-level cell QLC subtype in the SSD type.

In a possible implementation, the hotspot means that at least one of a virtual capacity of a storage pool, physical space occupation of the storage pool, and a bandwidth of the storage pool exceeds a corresponding threshold; the physical space occupation of the storage pool is a sum of occupied physical space in all storage volumes included in the storage pool; and the bandwidth of the storage pool is a sum of bandwidths of all the storage volumes included in the storage pool.

In a possible implementation, the scheduling node 840 is further configured to:

determine one or more strongly fluctuating storage volumes included in the storage system 800, where the strongly fluctuating storage volume means that a variation of at least one of physical space occupation and a bandwidth of a storage volume in a specified time interval exceeds a threshold variation; and evenly distribute the one or more included strongly fluctuating storage volumes to all the storage pools in the storage system 800 based on a quantity of the included strongly fluctuating storage volumes.

The scheduling node 840 in the storage system 800 may be implemented by using software, or may be implemented by using hardware. For example, the following describes an implementation of the scheduling node 840.

The module is used as an example of a software functional unit, and the scheduling node 840 may include code run on a computing instance. The computing instance may be at least one of computing devices such as a physical host, a virtual machine, and a container. Further, there may be one or more computing devices. For example, the scheduling node 840 may include code run on a plurality of hosts/virtual machines/containers. It should be noted that the plurality of hosts/virtual machines/containers used to run the application program may be distributed in a same region (region), or may be distributed in different regions. The plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the scheduling node 840 may include at least one computing device such as a server. Alternatively, the scheduling node 840 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

The plurality of computing devices included in the scheduling node 840 may be distributed in a same region, or may be distributed in different regions. The plurality of computing devices included in the scheduling node 840 may be distributed in a same AZ, or may be distributed in different AZs. Similarly, the plurality of computing devices included in the scheduling node 840 may be distributed in a same VPC, or may be distributed in a plurality of VPCs. The plurality of computing devices may be any combination of computing devices such as a server, an ASIC, a PLD, a CPLD, an FPGA, and a GAL.

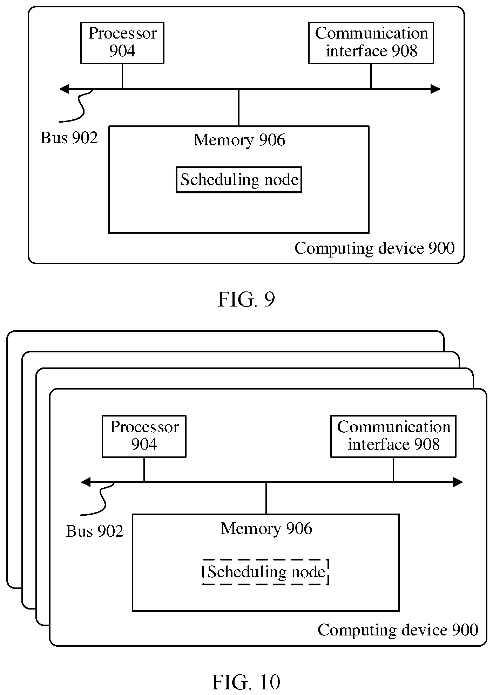

This application provides a computing device 900. FIG. 9 is a diagram of a structure of a computing device 900 according to this application. The computing device 900 includes:

a bus 902, a processor 904, a memory 906, and a communication interface 908. The processor 904, the memory 906, and the communication interface 908 communicate with each other by using the bus 902, where it should be understood that quantities of processors and memories in the computing device 900 are not limited in this application.

The bus 902 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 9, but this does not mean that there is only one bus or only one type of bus. The bus 902 may include a path for transmitting information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a micro processor (micro processor, MP), and a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid state drive, SSD).

The memory 906 stores executable code. The processor 904 executes the executable code to implement functions of the foregoing scheduling node 840, so as to implement a scheduling method. In other words, instructions used to perform the scheduling method are stored in the memory 906.

The communication interface 908 uses a transceiver module, for example, but not limited to, a network interface card or a transceiver, to implement communication between the computing device 900 and another device or a communication network.

This application provides a computing device cluster. The computing device cluster includes at least one computing device. The computing device may be a server, for example, a central server, an edge server, or a local server in a local data center.

As shown in FIG. 10, the computing device cluster includes at least one computing device 900. Memories 906 of one or more computing devices 900 in the computing device cluster may store same instructions used to perform a scheduling method.

In some possible implementations, the memories 906 of the one or more computing devices 900 in the computing device cluster may alternatively separately store some instructions used to perform an scheduling method. In other words, a combination of one or more computing devices 900 may jointly execute instructions used to perform an invocation method.

It should be noted that memories 906 of different computing devices 900 in the computing device cluster may store different instructions respectively used to perform some functions of the storage system 800. In other words, instructions stored in memories 906 of different computing devices 900 may implement functions of the scheduling node 840.

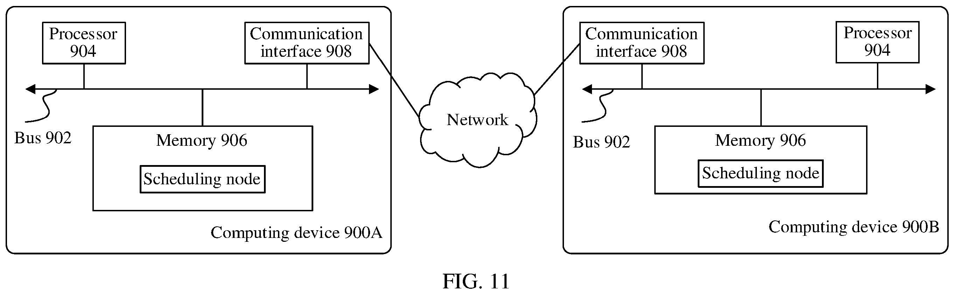

In some possible implementations, the one or more computing devices in the computing device cluster may be connected through a network. The network may be a wide area network, a local area network, or the like. FIG. 11 is a diagram of a structure of another computing device cluster according to this application. As shown in FIG. 11, two computing devices 900A and 900B are connected through a network. Specifically, each computing device is connected to the network through a communication interface of the computing device. In such possible implementations, the memory 906 of the computing device 900A stores instructions for performing a function of the scheduling node 840. In addition, the memory 906 of the computing device 900B also stores instructions for performing a function of the scheduling node 840.

In an implementation, the scheduling node 840 in the computing device 900A is configured to migrate a storage volume when determining that a hotspot occurs in a storage pool; and the scheduling node 840 in the computing device 900B is configured to: determine strongly fluctuating storage volumes in the storage system 800, and evenly distribute the highly fluctuating storage volumes to all storage pools based on the quantity of the highly fluctuating storage volumes.

It should be understood that functions of the computing device 900A shown in FIG. 11 may alternatively be completed by a plurality of computing devices 900. Similarly, functions of the computing device 900B may alternatively be completed by a plurality of computing devices 900.

An embodiment of this application further provides another computing device cluster. For a connection relationship between computing devices in the computing device cluster, refer to the connection manners of the computing device cluster in FIG. 10 and FIG. 11. In some possible implementations, memories 906 of one or more computing devices 900 in the computing device cluster may alternatively separately store some instructions used to perform a scheduling method. In other words, a combination of the one or more computing devices 900 may jointly execute instructions used to perform a scheduling method.

It should be noted that memories 906 of different computing devices 900 in the computing device cluster may store different instructions used to perform some functions of the storage system. In other words, instructions stored in the memories 906 in different computing devices 900 may implement functions of one or more apparatuses in the scheduling node 840.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform a scheduling method.

An embodiment of this application further provides a computer-readable storage medium. The computer-readable storage medium may be any usable medium that can be stored on a computing device, or a data storage device such as a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform a scheduling method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A storage system, comprising:

   a first storage pool, provided with a first storage medium of a first storage medium type, wherein the first storage medium is used to carry a plurality of storage volumes whose access attributes are the first storage medium type;
   a second storage pool, provided with a second storage medium of the first storage medium type, wherein the second storage medium is used to carry a plurality of storage volumes whose access attributes are the first storage medium type and a plurality of storage volumes whose access attributes are a second storage medium type;

a third storage pool, provided with a third storage medium of the second storage medium type, wherein the third storage medium is used to carry a plurality of storage volumes whose access attributes are the second storage medium type; and

a scheduling node, configured to:

when determining that a hotspot occurs in the first storage pool, migrate a part of storage volumes in the plurality of storage volumes whose access attributes are the first storage medium type in the first storage medium to the second storage medium in the second storage pool; and

when determining that a hotspot occurs in the second storage pool, migrate a part of storage volumes in the plurality of storage volumes whose access attributes are the first storage medium type in the second storage medium to the first storage medium in the first storage pool, and/or migrate a part of storage volumes in the plurality of storage volumes whose access attributes are the second storage medium type in the second storage medium to the third storage medium in the third storage pool, wherein

storage performance of the second storage medium type is lower than storage performance of the first storage medium type.

2. The storage system according to claim 1, further comprising:

a fourth storage pool, provided with a fourth storage medium of the second storage medium type, wherein the fourth storage medium is used to carry a plurality of storage volumes whose access attributes are the second storage medium type and a plurality of storage volumes whose access attributes are a third storage medium type; and

a fifth storage pool, provided with a fifth storage medium of the third storage medium type, wherein the fifth storage medium is used to carry a plurality of storage volumes whose access attributes are the third storage medium type, wherein

the scheduling node is further configured to:

when determining that a hotspot occurs in the third storage pool, migrate a part of storage volumes in the plurality of storage volumes whose access attributes are the second storage medium type in the third storage medium to the second storage medium in the second storage pool, and/or migrate a part of storage volumes in the plurality of storage volumes whose access attributes are the second storage medium type in the third storage medium to the fourth storage medium in the fourth storage pool;

when determining that a hotspot occurs in the fourth storage pool, migrate a part of storage volumes in the plurality of storage volumes whose access attributes are the second storage medium type in the fourth storage medium to the third storage medium in the third storage pool, and/or migrate a part of storage volumes in the plurality of storage volumes whose access attributes are the third storage medium type in the fourth storage medium to the fifth storage medium in the fifth storage pool; and

when determining that a hotspot occurs in the fifth storage pool, migrate a part of storage volumes in the plurality of storage volumes whose access attributes are the third storage medium type in the fifth storage medium to the fourth storage medium in the fourth storage pool, wherein

storage performance of the third storage medium type is lower than the storage performance of the second storage medium type.

3. The storage system according to claim 2, wherein the first storage medium type is a solid-state drive SSD type, the second storage medium type is a serial attached small computer system interface disk SAS type, and the third storage medium type is a serial disk SATA type.

4. The storage system according to claim 2, wherein the first storage medium type is a multi-level cell MLC subtype in a solid-state drive SSD type, the second storage medium type is a trinary-level cell TLC subtype in the SSD type, and the third storage medium type is a quad-level cell QLC subtype in the SSD type .

5. The storage system according to claim 2, wherein the first storage medium type is a single-level cell SLC subtype in a solid-state drive SSD type, the second storage medium type is a multi-level cell MLC subtype in the SSD type, and the third storage medium type is a trinary-level cell TLC subtype in the SSD type.

6. The storage system according to claim 2, wherein the first storage medium type is a single-level cell SLC subtype in a solid-state drive SSD type, the second storage medium type is a multi-level cell MLC subtype or a trinary-level cell TLC subtype in the SSD type, and the third storage medium type is a quad-level cell QLC subtype in the SSD type.

7. A scheduling method, wherein the method is applied to a scheduling node in a storage system; the storage system further comprises a first storage pool, a second storage pool, and a third storage pool; the first storage pool is provided with a first storage medium of a first storage medium type, and the first storage medium is used to carry a plurality of storage volumes whose access attributes are the first storage medium type; the second storage pool is provided with a second storage medium of the first storage medium type, and the second storage medium is used to carry a plurality of storage volumes whose access attributes are the first storage medium type and a plurality of storage volumes whose access attributes are a second storage medium type; the third storage pool is provided with a third storage medium of the second storage medium type, and the third storage medium is used to carry a plurality of storage volumes whose access attributes are the second storage medium type; storage performance of the second storage medium type is lower than storage performance of the first storage medium type; and the method comprises:

when determining that a hotspot occurs in the first storage pool, migrating a part of storage volumes in the plurality of storage volumes whose access attributes are the first storage medium type in the first storage medium to the second storage medium in the second storage pool; and
when determining that a hotspot occurs in the second storage pool, migrating a part of storage volumes in the plurality of storage volumes whose access attributes are the first storage medium type in the second storage medium to the first storage medium in the first storage pool, and/or migrating a part of storage volumes in the plurality of storage volumes whose access attributes are the second storage medium type in the second storage medium to the third storage medium in the third storage pool.

8. The method according to claim 7, wherein the storage system further comprises a fourth storage pool and a fifth storage pool; the fourth storage pool is provided with a fourth storage medium of the second storage medium type, and the fourth storage medium is used to carry a plurality of storage volumes whose access attributes are the second storage medium type and a plurality of storage volumes whose access attributes are a third storage medium type; and the fifth storage pool is provided with a fifth storage medium of the third storage medium type, and the fifth storage medium is used to carry a plurality of storage volumes whose access attributes are the third storage medium type; the method further comprises:

when determining that a hotspot occurs in the third storage pool, migrating a part of storage volumes in the plurality of storage volumes whose access attributes are the second storage medium type in the third storage medium to the second storage medium in the second storage pool, and/or migrating a part of storage volumes in the plurality of storage volumes whose access attributes are the second storage medium type in the third storage medium to the fourth storage medium in the fourth storage pool;
when determining that a hotspot occurs in the fourth storage pool, migrating a part of storage volumes in the plurality of storage volumes whose access attributes are the second storage medium type in the fourth storage medium to the third storage medium in the third storage pool, and/or migrating a part of storage volumes in the plurality of storage volumes whose access attributes are the third storage medium type in the fourth storage medium to the fifth storage medium in the fifth storage pool; and
when determining that a hotspot occurs in the fifth storage pool, migrating a part of storage volumes in the plurality of storage volumes whose access attributes are the third storage medium type in the fifth storage medium to the fourth storage medium in the fourth storage pool, wherein
storage performance of the third storage medium type is lower than the storage performance of the second storage medium type.

9. The method according to claim 8, wherein the first storage medium type is a solid-state drive SSD type, the second storage medium type is a serial attached small computer system interface disk SAS type, and the third storage medium type is a serial disk SATA type.

10. The method according to claim 8, wherein the first storage medium type is a multi-level cell MLC subtype in a solid-state drive SSD type, the second storage medium type is a trinary-level cell TLC subtype in the SSD type, and the third storage medium type is a quad-level cell QLC subtype in the SSD type.

11. The method according to claim 8, wherein the first storage medium type is a single-level cell SLC subtype in a solid-state drive SSD type, the second storage medium type is a multi-level cell MLC subtype in the SSD type, and the third storage medium type is a trinary-level cell TLC subtype in the SSD type.

12. The method according to claim 8, wherein the first storage medium type is a single-level cell SLC subtype in a solid-state drive SSD type, the second storage medium type is a multi-level cell MLC subtype or a trinary-level cell TLC subtype in the SSD type, and the third storage medium type is a quad-level cell QLC subtype in the SSD type.

13. The method according to any one of claims 7 to 12, wherein the hotspot means that at least one of a virtual capacity of a storage pool, physical space occupation of the storage pool, and a bandwidth of the storage pool exceeds a corresponding threshold; the physical space occupation of the storage pool is a sum of occupied physical space in all storage volumes comprised in the storage pool; and the bandwidth of the storage pool is a sum of bandwidths of all the storage volumes comprised in the storage pool.

14. The method according to claim 13, wherein the method further comprises:

   determining, by the scheduling node, one or more strongly fluctuating storage volumes comprised in the storage system, wherein the strongly fluctuating storage volume means that a variation of at least one of physical space occupation and a bandwidth of a storage volume in a specified time interval exceeds a threshold variation; and evenly distributing the one or more comprised strongly fluctuating storage volumes to all the storage pools in the storage system based on a quantity of the comprised strongly fluctuating storage volumes.

15. A computing device cluster, comprising at least one computing device, wherein each of the at least one computing device comprises a memory and a processor, and the processor of the at least one computing device is configured to execute instructions stored in the memory of the at least one computing device, so that the computing device cluster performs the method according to any one of claims 7 to 14.

16. A computer-readable storage medium, comprising computer program instructions, wherein when the computer program instructions are executed by a computing device cluster, the computing device cluster performs the method according to any one of claims 7 to 14.

FIG. 1

EP 4 567 575 A1

SAS|SATA hybrid storage pool
(used to carry an SATA storage
volume and an SAS storage
volume)

SATA storage pool
(used to carry an
SATA storage
volume)

SAS storage pool
(used to carry an
SAS storage
volume)

FIG. 2

SSD|SAS hybrid storage pool
(used to carry an SSD storage
volume and an SAS storage
volume)

SSD storage pool
(used to carry an
SSD storage
volume)

SAS storage pool
(used to carry an
SAS storage
volume)

FIG. 3

FIG. 4

EP 4 567 575 A1

A scheduling node determines a first hybrid storage pool in a storage system — S101

Monitor each storage pool and each storage volume in the storage system — S102

When it is monitored that a hotspot occurs in a storage pool in the storage system, migrate, to the first hybrid storage pool, a part of storage volumes in the storage pool in which the hotspot occurs — S103

When it is monitored that one or more strongly fluctuating storage volumes exist in the storage system, evenly distribute the one or more strongly fluctuating storage volumes to all storage pools in the storage system — S104

FIG. 5

SAS storage pool | SAS|SSD hybrid storage pool | SSD storage pool | SAS storage pool | SAS|SSD hybrid storage pool | SSD storage pool

FIG. 6

| Initial state | Scheduling of storage pools of a same type | Scheduling of hybrid storage pools |

FIG. 7

800

810  820  830  840  850  860

| First storage pool | Second storage pool | Third storage pool | Scheduling node | Fourth storage pool | Fifth storage pool |

FIG. 8

Processor
904

Communication
interface 908

Bus 902

Memory 906

Scheduling node

Computing device 900

FIG. 9

Processor
904

Communication
interface 908

Bus 902

Memory 906

Scheduling node

Computing device 900

FIG. 10

EP 4 567 575 A1

Processor
904

Communication
interface 908

Bus 902

Memory 906

Scheduling node

Computing device 900A

Network

Communication
interface 908

Processor
904

Bus 902

Memory 906

Scheduling node

Computing device 900B

FIG. 11

## INTERNATIONAL SEARCH REPORT

| International application No. |
|---|
| **PCT/CN2023/105224** |

| A. CLASSIFICATION OF SUBJECT MATTER |
|---|
| G06F3/06(2006.01)i |
| According to International Patent Classification (IPC) or to both national classification and IPC |

| B. FIELDS SEARCHED |
|---|
| Minimum documentation searched (classification system followed by classification symbols) |
| IPC:G06F |

| Documentation searched other than minimum documentation to the extent that such documents are included in the fields searched |
|---|
| |

| Electronic data base consulted during the international search (name of data base and, where practicable, search terms used) |
|---|
| CNABS; CNTXT; VEN; ENTXT; EPTXT; WOTXT; CNKI: 混合, 联合, 组合, 存储池, 两个, 多个, 存储介质, 热点, 容量, 带宽, 迁移, 消除, mix, unite, combine, storage pool, two, multiple, storage medium, hotspot, capacity, bandwidth, migration, eliminate |

| C. DOCUMENTS CONSIDERED TO BE RELEVANT | | |
|---|---|---|
| Category* | Citation of document, with indication, where appropriate, of the relevant passages | Relevant to claim No. |
| Y | CN 112988066 A (NEW H3C BIG DATA TECHNOLOGIES CO., LTD.) 18 June 2021 (2021-06-18) <br> description, paragraphs 56-117 | 1-16 |
| Y | CN 105138290 A (INSPUR (BEIJING) ELECTRONIC INFORMATION INDUSTRY CO., LTD.) 09 December 2015 (2015-12-09) <br> description, paragraphs 41-74 | 1-16 |
| Y | CN 112783831 A (NEW H3C BIG DATA TECHNOLOGIES CO., LTD.) 11 May 2021 (2021-05-11) <br> description, paragraphs 5-48 | 1-16 |
| A | CN 112463228 A (SUZHOU INSPUR INTELLIGENT TECHNOLOGY CO., LTD.) 09 March 2021 (2021-03-09) <br> entire document | 1-16 |
| A | US 2020073955 A1 (IBM) 05 March 2020 (2020-03-05) <br> entire document | 1-16 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 October 2023** | **16 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

**C.    DOCUMENTS CONSIDERED TO BE RELEVANT**

| Category* | Citation of document, with indication, where appropriate, of the relevant passages | Relevant to claim No. |
|---|---|---|
| A | US 2021103399 A1 (IBM) 08 April 2021 (2021-04-08)<br>entire document | 1-16 |

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 112988066 | A | 18 June 2021 | CN | 112988066 | B | 30 August 2022 |
| CN | 105138290 | A | 09 December 2015 | | None | | |
| CN | 112783831 | A | 11 May 2021 | CN | 112783831 | B | 27 May 2022 |
| CN | 112463228 | A | 09 March 2021 | | None | | |
| US | 2020073955 | A1 | 05 March 2020 | US | 10922268 | B2 | 16 February 2021 |
| US | 2021103399 | A1 | 08 April 2021 | US | 11163476 | B2 | 02 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210985223

- CN 202211508564